# EUROPEAN PATENT APPLICATION

(11) **EP 1 662 787 A2**
(43) Date of publication of application: **31.05.2006**
(21) Application number: 05110897.5
(22) Date of filing: 17.11.2005
(51) Int. Cl.: H04N 7/14

(54) **Signal transmitting and receiving device and signal transmitting and receiving method**

(30) Priority: 26.11.2004 JP 2004342193
(71) Applicant: Pioneer Corporation, Meguro-ku, Tokyo (JP)
(72) Inventor: NOGUCHI, Ryoji, Tokyo (JP); SOGA, Yusuke, Tokyo (JP); AKIMOTO, Takayuki, Tokyo (JP); IWAI, Tomoaki, Tokyo (JP)
(74) Representative: Betten & Resch

(57) **Abstract**

A signal transmitting and receiving device and a signal transmitting and receiving method which can reduce power consumption in a terminal device in a standby state in an optical and electric communication system. The signal transmitting and receiving device is for transmitting and receiving an information signal through a predetermined transfer path between terminal devices each of which transmits and receives the information signal while controlling an operation thereof in a self-sustaining manner based on an internally-generated signal. The signal transmitting and receiving device includes: a signal relaying means for relaying the information signal between each of the terminal devices and the transfer path; a device-state detecting means for generating a state indication signal indicating a state of the terminal device based on the internally-generated signal; and a power controlling means for controlling power supply to the signal relaying means based on the state indication signal. The internally-generated signal may include a standby signal and a clock signal in the terminal device.

## Description

### BACKGROUND OF THE INVENTION

### 1. Field of the Invention

The present invention relates to a signal transmitting and receiving device and a signal transmitting and receiving method for transmitting and receiving a signal from a terminal device through a transfer path such as an optical fiber cable.

### 2. Description of the Related Art

A system that meets DVI (Digital Visual Interface) standard is known as a system for connecting a host-side terminal device such as a digital video disc player and a digital broadcasting receiver, to a monitor-side terminal device such as a wide-screen display using a liquid crystal display panel or a PDP, and transmitting and receiving various signals such as an image signal and a control signal through a transfer path such as an optical fiber cable, for example. Transmission and receiving of a signal between the terminal devices in accordance with DVI requires a signal transmitting and receiving device that is arranged between each terminal device and the transfer path and performs a process for transmitting and receiving various signals to be transferred. That signal transmitting and receiving device has various functions including a function of performing electric-to-optical conversion and/or optical-to-electric conversion, a function of multiplexing a plurality of different signals and/or dividing a plurality of multiplexed signals, or the like.

Conventionally, a technique described in Japanese Patent Kokai No. 2003-209920 is widely known as a method for reducing power consumption in an optical and electric communication system using the above signal transmitting and receiving device, for example. That publication discloses an arrangement for stopping power supply to the signal transmitting and receiving device when a DVI optical fiber cable is not properly connected to the signal transmitting and receiving device or when a trouble is detected in any of various control signals to be transmitted and received between the terminal devices.

However, according to the above conventional technique, power supply to the signal transmitting and receiving device connected to each terminal device cannot be restricted while a state of connection between the terminal devices and a state of the transfer path are normal and values of the various control signals to be transmitted and received between the terminal devices are normal. Thus, even when each terminal device is in a standby state and is not operating, for example, a power that is the same as that supplied when the terminal device is operating continues to be supplied to the signal transmitting and receiving device. This results in consumption of a useless power in the entire optical and electric communication system. Moreover, the power is continuously supplied to a signal conversion circuit for performing electric-to-optical conversion and/or optical-to-electric conversion incorporated into the signal transmitting and receiving device, too, for example. This is unfavorable in terms of stress applied to electronic parts that are used.

### SUMMARY OF THE INVENTION

Therefore, it is an object of the present invention to provide a signal transmitting and receiving device and a signal transmitting and receiving method, which can reduce power consumption in a terminal device in a standby state in an optical and electric communication system, for example.

According to a first aspect of the present invention, there is provided a signal transmitting and receiving device for transmitting and receiving an information signal through a predetermined transfer path between terminal devices each of which transmits and receives the information signal while controlling an operation thereof in a self-sustaining manner based on an internally-generated signal. The signal transmitting and receiving device includes: a signal relaying means for relaying the information signal between each of the terminal devices and the transfer path; a device-state detecting means for generating a state indication signal indicating a state of that terminal device based on the internally-generated signal; and a power controlling means for controlling power supply to the signal relaying means based on the state indication signal.

According to a second aspect of the present invention, there is provided a signal transmitting and receiving method for use in a signal transmitting and receiving device that includes a signal relaying part and transmits and receives an information signal through a predetermined transfer path between terminal devices each of which transmits and receives the information signal while controlling an operation thereof in a self-sustaining manner based on an internally-generated signal. The method includes the steps of: generating a state indication signal indicating a state of each of the terminal devices based on the internally-generated signal of that terminal device; and controlling power supply to the signal relaying part based on the state indication signal.

### BRIEF DESCRIPTION OF THE DRAWINGS

Fig. 1 is a block diagram of an optical and electric communication system using a signal transmitting and receiving device according to a first embodiment of the present invention;
Fig. 2 is a time chart showing an example of signal detection in a control signal detection circuit 28 in Fig. 1;
Fig. 3 is a time chart showing an example of signal detection in a clock detection circuit 27 in Fig. 1;
Fig. 4 is a time chart showing an example of signal detection in a reception-state detection circuit 26 in Fig. 1;
Fig. 5 is a time chart showing an example of signal detection in a light-receiving level detection circuit 23 in Fig. 1;
Fig. 6 is a block diagram of an optical and electric communication system using a signal transmitting and receiving device according to a second embodiment of the present invention;
Fig. 7 is a block diagram of an optical and electric communication system using a signal transmitting and receiving device according to a third embodiment of the present invention; and
Fig. 8 is a block diagram of an optical and electric communication system according to a fourth embodiment of the present invention.

### DETAILED DESCRIPTION OF THE INVENTION

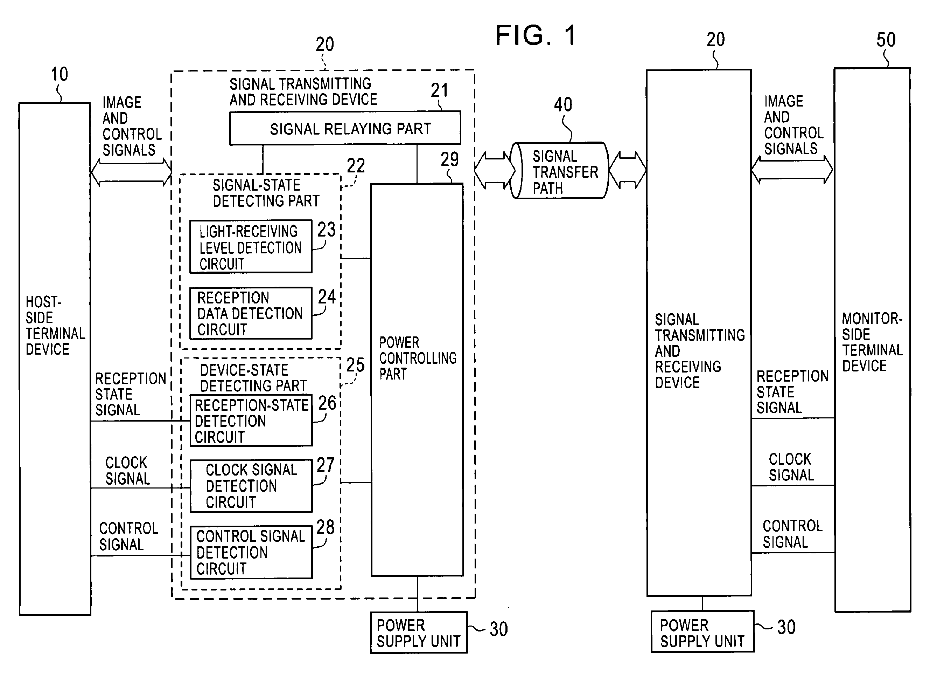

Fig. 1 shows an arrangement of an optical and electric communication system according to a first embodiment of the present invention.

Referring to Fig. 1, a host-side terminal device 10, such as a digital video disc player and a digital broadcasting receiver, reproduces or acquires a digital image signal.

A signal transmitting and receiving device 20 performs a predetermined process for an image signal, a control signal, and the like that are supplied from the host-side terminal device 10 and outputs the processed signals to a signal transfer path 40. The signal transmitting and receiving device 20 also performs a predetermined process for various signals taken in from the signal transfer path 40 and supplies the processed signals to the host-side terminal device 10. The signal transmitting and receiving device 20 may be incorporated into the host-side terminal device 10 or be integrated with the host-side terminal device 10 as one unit.

As shown in Fig. 1, the signal transmitting and receiving device 20 includes: a signal relay unit 21 for performing a transmitting and receiving process for a transfer signal; a signal-state detection unit 22 for detecting a reception level of a signal that is transmitted and received through the signal transfer path 40 and a state of reception data; a device-state detection unit 25 for detecting various control signals and a device state signal that are supplied from the host-side terminal device 10; and a power control unit 29 for controlling power supply from a power supply unit 30 described later.

The power supply unit 30 is a power supply circuit for supplying a power to the respective units of the signal transmitting and receiving device 20, e.g., the signal relay unit 21. The power supply unit 30 may be provided as an external power supply. Alternatively, the power supply unit 30 may be provided inside the signal transmitting and receiving device 20 or the host-side terminal device 10.

The signal transfer path 40 is formed by a wired communication medium such as an optical fiber cable or a metallic cable, or a wireless communication medium such as weak electric waves or infrared rays. The signal transfer path 40 may use a single communication medium, a plurality of communication media of the same type, or a plurality of communication media of different types.

A monitor-side terminal device 50 is a wide-screen display panel device using a liquid crystal display panel, a PDP, or the like, and reproduces and displays an image signal supplied from the host-side terminal device 10 on a display screen. A signal transmitting and receiving device 20 and a power supply unit 30 that are connected to the monitor-side terminal device 50 are the same as those connected to the host-side terminal device 10 described above and therefore the description thereof is omitted.

An operation of the signal transmitting and receiving device 20 is now described based on the optical and electric communication system shown in Fig. 1. In the following description, a case where the signal transfer path 40 uses an optical fiber cable is described as an example.

First, the signal-state detection unit 22 detects a state of a signal that is transmitted and received through the signal transfer path 40, by using various detection circuits included therein. For example, a light-receiving level of an optical signal received from the optical fiber cable of the signal transfer path 40 is detected by using a light-receiving level detection circuit 23, or a state of reception data is detected by using a reception data detection circuit 24.

In the detection of the light-receiving level, when an unintended event that the light-receiving level of the optical signal from the optical fiber cable of the signal transfer path 40 is lower than a predetermined threshold level, for example, is detected, the signal-state detection unit 22 sends a predetermined command to the power control unit 29. The power control unit 29 stops power supply from the power supply unit 30 to the respective units of the signal transmitting and receiving device 20 including the signal relay unit 21 based on that command.

In the detection of the state of the reception data, when data received from the optical fiber cable of the signal transfer path 40 is not normal, more specifically, when a state in which a predetermined data pattern that is always transmitted at start of data communication cannot be received is detected, for example, the signal-state detection unit 22 sends a predetermined command to the power control unit 29. The power control unit 29 stops power supply from the power supply unit 30 to the signal relay unit 21 and the other units based on that command.

The device-state detection unit 25 includes a reception-state detection circuit 26, a clock detection circuit 27, and a control signal detection circuit 28. The device-state detection unit 25 detects various control signals and a state indication signal that are supplied from the host-side terminal device 10 using those circuits to indicate a state of the host-side terminal device 10.

For example, the reception-state detection circuit 26 detects that a reception data signal is not input to the host-side terminal device 10 and/or an unintended reception data signal is input to the host-side terminal device 10. The clock detection circuit 27 detects a clock signal of the host-side terminal device 10, thereby detecting that the clock signal is stopped and/or detecting that a clock signal having an unintended frequency is output. The control signal detection circuit 28 detects a control signal, e.g., a standby signal indicating that the host-side terminal device 10 is in a standby state.

When each of the aforementioned detection circuits of the device-state detection unit 25 has done the corresponding detection, the device-state detection unit 25 transmits a predetermined command to the power control unit 29. The power control unit 29 controls the supply and stop of a power from the power supply unit 30 to the respective units of the signal transmitting and receiving device 20 including the signal relay unit 21 based on that command.

Next, a specific method for determining various detection signals in the device-state detection unit 25 is described for each of the detection circuits included in the device-state detection unit 25.

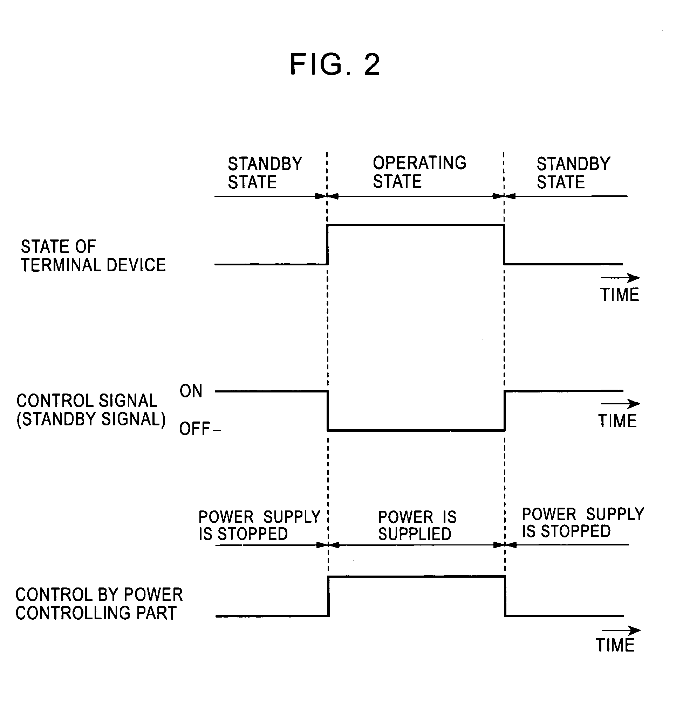

First, a method for determining the detection signal in the control signal detection circuit 28 is described, referring to a time chart of Fig. 2. A standby signal in which its logic changes depending on whether the corresponding terminal device is in a standby state or an operating state is an exemplary control signal supplied from the terminal device 10 or 50 connected to the signal transmitting and receiving device 20. That is, the standby signal is on while the corresponding terminal device is in the standby state, and is off while the corresponding terminal device is in the operating state.

The control signal detection circuit 28 detects whether the standby signal is on or off. When the standby signal is on, the control signal detection circuit 28 sends the power control unit 29 a command to stop power supply from the power supply unit 30 to the respective units of the signal transmitting and receiving device 20 including the signal relay unit 21. When the standby signal is off, the control signal detection circuit 28 sends the power control unit 29 a command to supply a power. Another control signal may be used for distinguishing the standby state and the operating state of the terminal device from each other in combination with the standby signal.

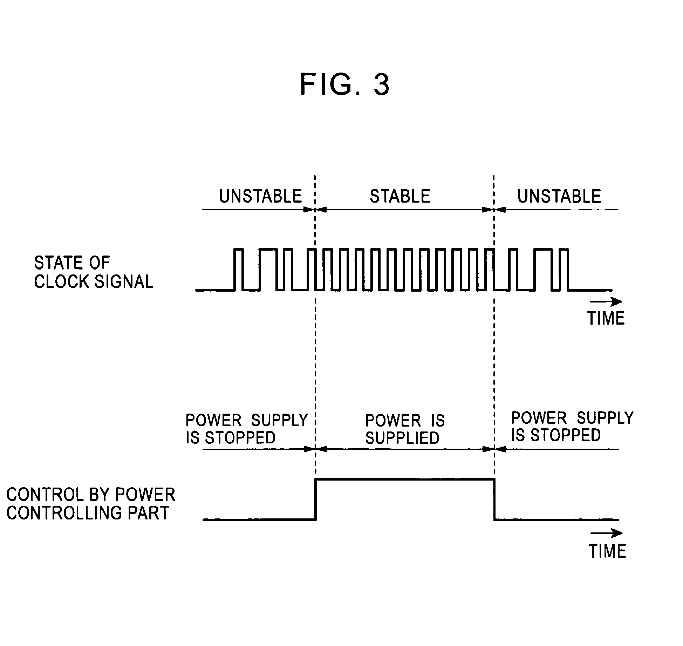

Next, a method for determining the detection signal in the clock signal detection circuit 27 is described, referring to a time chart of Fig. 3. The clock signal detection circuit 27 detects whether the clock signal supplied from the terminal device 10 or 50 connected to the signal transmitting and receiving device 20 is stable or unstable. More specifically, even if the terminal device is turned on and is operating, the clock signal in that terminal device may be unstable because of a failure in a clock generation circuit inside that terminal device, for example. In this case, it is difficult to transfer data between the terminal devices in synchronization with that unstable clock signal. Thus, power supply from the power supply unit 30 to the signal transmitting and receiving device 20 including the signal relay unit 21 is stopped, thereby suppressing useless power consumption.

In order to determine whether the clock signal is stable or unstable, a value of a clock frequency used in the terminal device may be stored in advance and the clock signal detection circuit 27 may detect the presence or absence of the clock signal having that clock frequency. Alternatively, when a frequency range of the clock signal in which the optical and electric communication system can operate is determined, the clock signal detection circuit 27 may detect whether or not the clock signal having a frequency within the above frequency range is output from the terminal device.

After detecting whether the clock signal is stable or unstable, when the detected clock signal is unstable, the clock signal detection circuit 27 sends the power control unit 29 a command to stop power supply from the power supply unit 30 to the respective units of the signal transmitting and receiving device 20 including the signal relay unit 21. On the other hand, when the detected clock signal is stable, the clock signal detection circuit 27 sends the power control unit 29 a power-supply command. In order to ensure an operation of the optical and electric communication system, clock pulses of the clock signal may be counted and power supply may start after the frequency of the clock signal becomes sufficiently stable.

The reception-state detection circuit 26 is now described. Control of power supply from the power supply unit 30 to the signal transmitting and receiving device 20 based on the state of the reception data can be achieved by the following method. That is, whether or not the reception data is input to the terminal device is detected. Alternatively, whether or not the reception data having an intended data pattern is input to the terminal device is detected. In a case where coding of a transfer signal such as compression and/or scrambling of an image signal is performed, a power may be stopped by detecting that a data pattern that cannot exist in the above coding is transferred.

Moreover, when a transfer procedure for sending a predetermined data pattern at start of data transfer is determined between the terminal devices in advance, control of power supply may be performed by using a flag or the like indicating that the predetermined data pattern is received as a reception state signal.

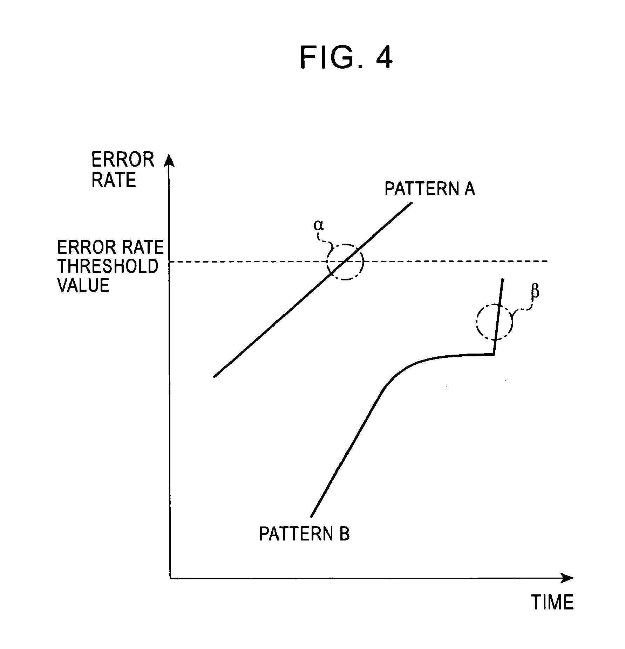

Control of power supply can be performed by using an error rate in demodulation of reception data, as the detection signal. For example, as shown in Fig. 4, the error rate of reception data is always monitored. Power supply may be stopped by detecting a time (α) at which the error rate exceeds a predetermined threshold value, as shown in Pattern A. Alternatively, even when the error rate is within the predetermined threshold value, power supply may be stopped at a time (β) at which a rapid deterioration of the error rate is detected, as shown in Pattern B in Fig. 4.

Next, a specific method for determining the detection signal in the signal-state detection unit 22 is described for each of the detection circuits included in the signal-state detection unit 22.

First, the light-receiving level detection circuit 23 may always monitor a level of light received through the optical fiber cable so as to control the power supply in accordance with the monitoring result.

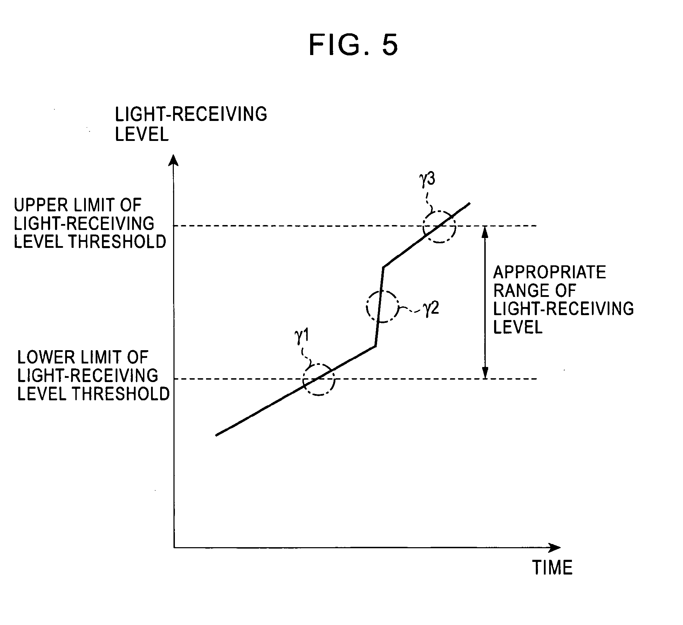

For example, as shown in Fig. 5, a lower limit and an upper limit of the light-receiving level threshold are determined in advance. Power supply may be controlled when the light-receiving level detection circuit 23 detects a point (γ1 or γ3) at which a detected value of the light-receiving level exceeds one of the lower limit and the upper limit or a point (γ2) at which a change rate of the light-receiving level becomes large even if the light-receiving level is in an appropriate range of the light-receiving level. Incidentally, a power is continuously supplied to light-receiving devices such as a light-receiving circuit or a photodiode for monitoring reception light because monitoring should be performed continuously.

The reception data detection circuit 24 is now described. The reception data detection circuit 24 may detect an optical signal or an electric signal. In order to decide whether or not the reception data is good, a method may be employed in which predetermined data (standby data) to be transferred between the terminal devices in the standby state is determined in advance and whether or not the reception data is good is decided by determining whether or not the standby data is received by the receiving-side terminal device. Alternatively, whether or not the reception data is good may be decided by determining how many packets of the above standby data axe received by the receiving-side terminal device. Further alternatively, the above decision may be performed when an error rate of the reception data becomes lower than a predetermined threshold value or largely lowers, while the error rate is monitored.

The various detection circuits described above are exemplified only for explaining the operation of the signal transmitting and receiving device 20. However, the detection circuits included in the signal-state detection unit 22 and the device-state detection unit 25 are not limited to the above example.

Moreover, it is not necessary to use all of the aforementioned detection circuits at the same time. For example, only one or more of them may be used so as to perform the detection processes, or the respective detection circuits may be used in any combination. Moreover, power supply from the power supply unit 30 to the respective units of the signal transmitting and receiving device 20 including the signal relay unit 21 may be performed for each of circuits and electronic and optical parts included in the signal transmitting and receiving device 20 in stages in accordance with the detection conditions of the respective detection circuits.

In addition, DDC5V and HPD signals that will be described later or other control signals such as information on determination of an external power supply input may be detected and combined so as to control the supply and stop of a power.

As described above, according to the present embodiment, a signal transmitting and receiving device is provided which transmits and receives an information signal through a predetermined transfer path between terminal devices each of which transmits and receives the information signal while controlling an operation thereof in a self-sustaining manner based on an internally generated signal. The signal transmitting and receiving device includes: a signal relay unit 21 corresponding to the signal relaying part relaying the information signal between each of the terminal devices and the transfer path; a device-state detection unit 25 corresponding to the device-state detection unit generating a state indication signal that indicates a state of that terminal device based on the internally-generated signal; and a power control unit 29 corresponding to the power control unit controlling power supply to the signal relaying part based on the state indication signal.

Even when a trouble occurs in the transfer path or the reception signal, the terminal device is in the standby state, or a failure occurs in the terminal device, the signal transmitting and receiving device of the present embodiment with the above-described arrangement can detect the trouble, the standby state, or the failure and can stop power supply to an optical and electronic circuit. Thus, it is possible to reduce power consumption in the optical and electric communication system.

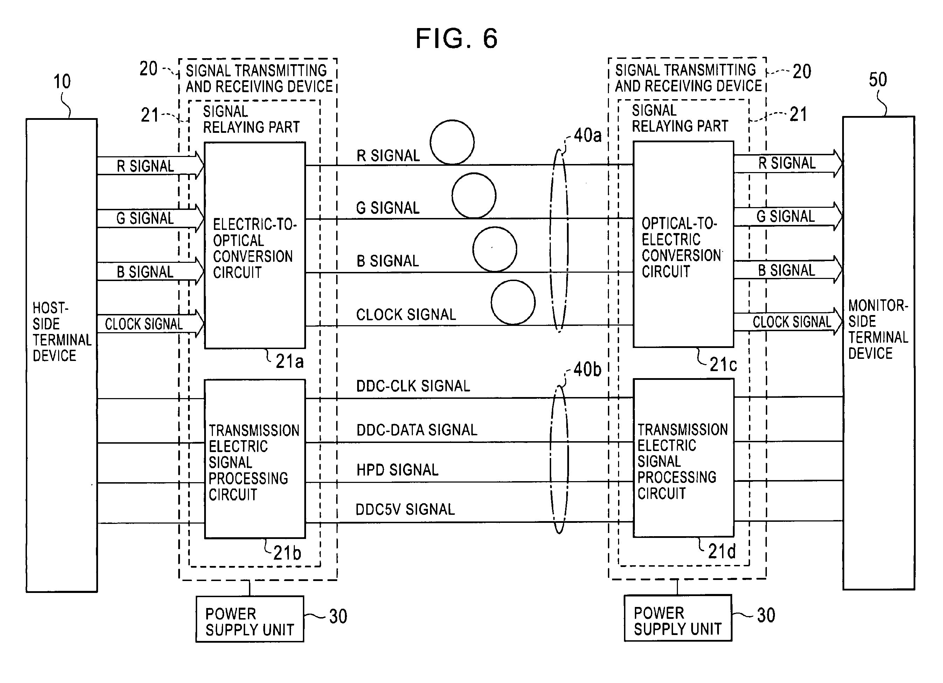

A signal transmitting and receiving device according to a second embodiment of the present invention is described based on an optical and electric communication system shown in Fig. 6.

The second embodiment corresponds to a case where the present invention is applied to a DVI optical fiber system. The second embodiment is different from the first embodiment only in the arrangement of the signal relay unit 21 of the signal transmitting and receiving device 20 and the form of the signal transfer path 40. Although the signal-state detection unit 22, the device-state detection unit 25, and the power control unit 29 are not shown in Fig. 6, it goes without saying that the signal transmitting and receiving device 20 of the second embodiment also include those units as in the first embodiment. The description of those units is omitted in the second embodiment because they have been described in detail in the first embodiment.

In the optical and electric communication system shown in Fig. 6, the signal relay unit 21 of the host-side signal transmitting and receiving device 20 includes an electric-to-optical conversion circuit 21a. In this system, so-called R, G, and B pixel signals and a TMDS (Transition Minimized Differential Signaling) clock signal contained in an image signal supplied from the host-side terminal device 10, in the form of electric signals, are converted to optical signals by the electric-to-optical conversion circuit 21a. The thus obtained optical signals are transferred to the monitor-side signal transmitting and receiving device 20 through different optical fiber cables 40a, respectively, and are then converted to electric signals again in an optical-to-electric conversion circuit 21c of the monitor-side signal transmitting and receiving circuit 20. Then, the thus obtained electric signals are supplied to the monitor-side terminal device 50.

On the other hand, various control signals supplied from the host-side terminal device 10 are subjected to a predetermined signal process such as scrambling and/or conversion to a bi-phase signal, in a transmission electric signal processing circuit 21b that is also included in the signal relay unit 21. The thus processed electric signals are transferred to the monitor-side signal transmitting and receiving device 20 through a plurality of metallic cables 40b, and are then supplied to the monitor-side terminal device 50 through a transmission electric signal processing circuit 21d in the monitor-side signal transmitting and receiving device 20. Incidentally, transmission from the monitor-side terminal device 50 to the host-side terminal device 10 can occur because each of the aforementioned various control signals can be transferred between terminal devices in both directions.

DDC in Fig. 6 stands for "Display Data Channel," which denotes a signal in a standard related to computers and video equipment. DDC-related control signals mainly include a DDC clock signal, a DDC data signal, and a DDC5V signal that are used in adjustment and setting of the device. Moreover, HPD in Fig. 6 stands for "Hot Plug Detect," which is defined in a standard of computer industry. An HPD signal is used for indicating a status when a connection line is connected and disconnected to/from a device without turning off the device, for example.

In the second embodiment, the signal-state detection unit 22, the device-state detection unit 25, and other circuits that are included in the signal transmitting and receiving device 20 detect the states of the respective signals described above and control the supply and stop of a power from the power supply unit 30 to the respective units of the signal transmitting and receiving unit 20 including the signal relay unit 21 in accordance with the detection conditions through the power control unit 29.

Thus, when a trouble occurs in the transfer path or the reception signal, the terminal is in the standby state, or a failure occurs in the terminal, it is possible to detect the trouble, the standby state, or the failure and stop power supply to an optical and electronic circuit in the present embodiment, too. Therefore, power consumption of the optical and electric communication system can be reduced.

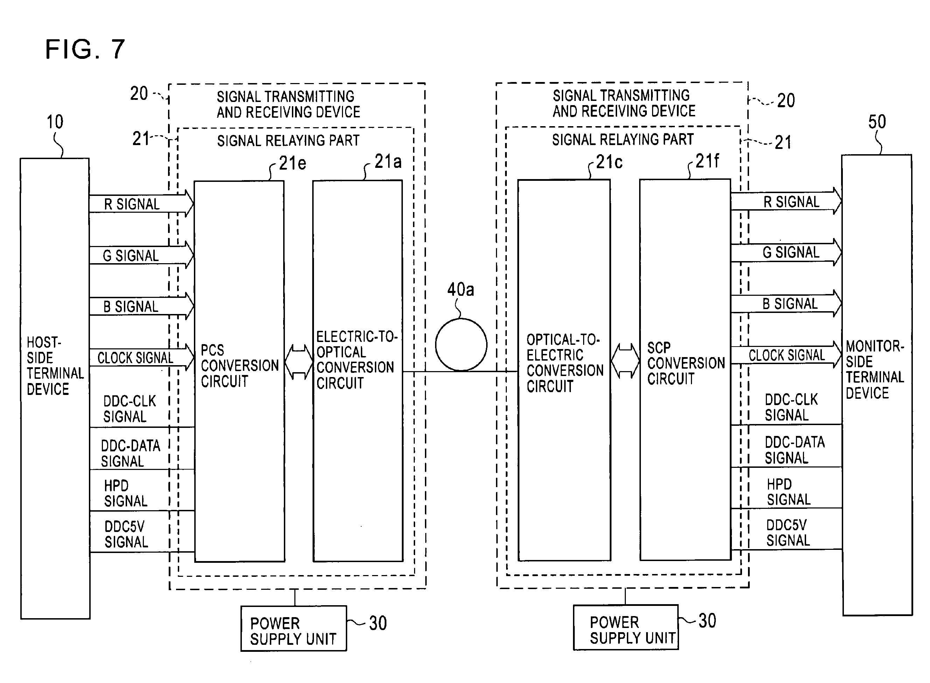

Next, a signal transmitting and receiving device according to a third embodiment of the present invention is described based on an optical and electric communication system shown in Fig. 7.

The third embodiment shows an exemplary application of the present invention in a system in which an image signal and various control signals supplied from the host-side terminal device 10 are converted into one line of serial data and the serial data is transferred on a single optical fiber cable.

Thus, the third embodiment is different from the first and second embodiments only in the arrangement of the signal relay unit 21 of the signal transmitting and receiving device 20 and the form of the signal transfer path 40. Although the signal-state detection unit 22, the device-state detection unit 25, and the power control unit 29 that are included in the signal transmitting and receiving device 20 are not shown in Fig. 7, it goes without saying that those units are also included in the signal transmitting and receiving device 20. Those units are not described in the present embodiment because they have been described in detail in the first embodiment.

In the optical and electric communication system in Fig. 7, a parallel-to-serial signal conversion circuit 21e is included in the signal relay unit 21 of the host-side signal transmitting and receiving device 20. The parallel-to-serial signal conversion circuit 21e performs serial formatting and time division multiplexing for the image signal and various control signals that are supplied from the host-side terminal device 10. The serial data signal generated by the parallel-to-serial signal conversion circuit 21e is supplied to the electric-to-optical conversion circuit 21a that converts the signal into an optical signal. Then, the converted optical signal is transferred to the monitor-side signal transmitting and receiving device 20 through the optical fiber cable 40a.

On the other hand, when receiving the above optical signal, the monitor-side signal transmitting and receiving device 20 converts it into an electric signal in the optical-to-electric conversion circuit 21c of the signal relay unit 21 included therein. Then, the monitor-side signal transmitting and receiving device 20 divides that electric signal of one line of serial data into the image signal and various control signals by a serial-to-parallel signal conversion circuit 21f and supplies the obtained signals to the monitor-side terminal device 50.

In the present embodiment, the signal-state detection unit 22, the device-state detection unit 25, and other circuits that are included in the signal transmitting and receiving device 20 also detect the states of the signals transferred between the terminal devices and the state of the terminal device. Power supply from the power supply unit 30 to the respective units of the signal transmitting and receiving device 20 including the signal relay unit 21 is controlled in accordance with the detected conditions.

Thus, even when a trouble occurs in the transfer path or the reception signal, the terminal device is in the standby state, or a failure occurs in the terminal device, it is possible to detect the trouble, the standby state, or the failure and stop power supply to an optical and electronic circuit in the present embodiment, too. Therefore, power consumption can be reduced in the optical and electric communication system.

Moreover, the present invention can be applied to an optical and electric communication system using an HDMI (High-Definition Multimedia Interface) optical fiber system that can transfer a plurality of lines of image signals, control signals, and other signals. In addition, a power is supplied to the signal transmitting and receiving device 20 from the power supply unit 30 provided outside the signal transmitting and receiving device 20 in the respective embodiments described above. Alternatively, a power may be supplied from each terminal device.

In each of the aforementioned embodiments, a system is described which controls the supply and stop of a power to optical and electronic circuits and parts that are related to the signal transmitting and receiving process by detecting the state of the reception signal or the terminal device. However, there are a number of circuits and parts for which power supply is to be controlled. Moreover, each of the circuits and parts should be controlled individually in some cases. In an embodiment described below, a specific example of control of power supply to those circuits and parts is described.

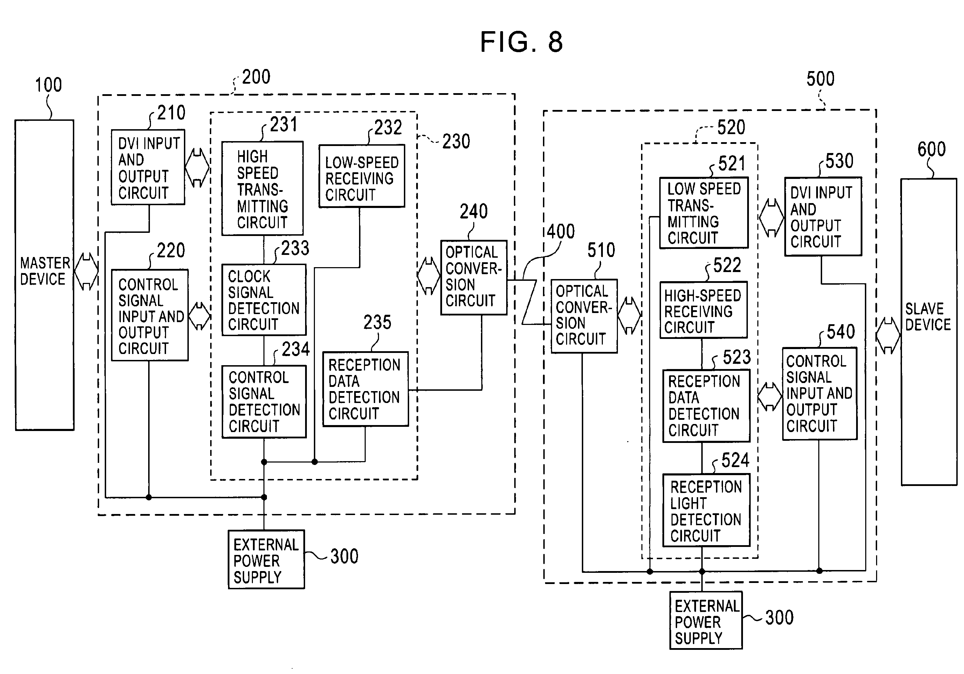

Fig. 8 shows an example of power supply control in an optical and electric communication system. In the system shown in Fig. 8, control is performed for power supply to a high-speed transmitting circuit 231 and an optical conversion circuit 240 that axe included in a transmitting unit 200 connected to a master device 100 and power supply to a high-speed receiving circuit 522 included in a receiving unit 500 connected to a slave device 600. Those circuits include a high-speed processor, a laser diode, or another part that requires a large amount of power. Therefore, if power supply to that circuit or part can be stopped while the device is in the standby state, power consumption in the entire system can be reduced.

First, in the transmitting unit 200, power supply to the high-speed transmitting circuit 231 is controlled by using results of detection of a clock signal in a clock signal detection circuit 233 and detection of a control signal in a control signal detection circuit 234. More specifically, it is not necessary to make the high-speed transmitting circuit 231 operate while the master device or the like connected to the transmitting unit 200 is in the standby state. Therefore, power supply to the high-speed transmitting circuit 231 can be controlled by detecting the control signal in the manner described in each of the aforementioned embodiments. Moreover, it is also unnecessary to make the high-speed transmitting circuit 231 operate in a case where a normal clock signal is not supplied from the master device connected to the high-speed transmitting circuit 231. Thus, power supply to the high-speed transmitting circuit 231 can be controlled by detecting the clock signal.

In addition, the aforementioned detection methods may be combined. That is, when both the detected conditions are satisfied, power supply to the high-speed transmitting circuit 231 may be controlled. For example, a signal switching timing is different between the control signal and the clock signal in some types of master device. In this case, the above detection methods related to the control signal and the clock signal are combined, thereby power supply can be surely controlled when both conditions are satisfied.

On the other hand, power supply to the optical conversion circuit 240 of the transmitting unit 200 is controlled by using a result of detection of reception data in a reception data detection circuit 235. That is, if the reception data is not normal, it is not necessary to make the optical conversion circuit 240 operate. Therefore, power supply to the optical conversion circuit 240 can be controlled by detecting the reception data in the manner described in each of the aforementioned embodiments. Since the optical conversion circuit 240 includes a part that requires large power consumption and generates a heat, such as a laser diode, a life of that part can be made longer by stopping power supply to that part.

Next, control of power supply to the high-speed receiving circuit 522 included in the receiving unit 500 connected to the slave device 600 is described. Power supply to the high-speed receiving circuit 522 is controlled by using results of detection of the reception data in a reception data detection circuit 523 and detection of reception light in a reception light detection circuit 524. That is, it is not necessary to make the high-speed receiving circuit 522 operate when a level of an optical signal received through an optical fiber cable 400 is not normal. Therefore, power supply can be controlled by detecting the reception light. Moreover, it is also unnecessary to make the high-speed receiving circuit 522 operate when the reception data is not normal. Therefore, power supply to the high-speed receiving circuit 522 can be controlled by detecting the reception data. Furthermore, combination of detection of the reception light and detection of the reception data enables control of power supply to the high-speed receiving circuit 522 to be performed when a trouble is detected in one of the light-receiving level and the reception data.

A detection method that can be applied to the present invention is not limited to the above. Power supply to optical and electronic circuits and parts related to transmission and receiving of a signal between terminal devices can be controlled by using other methods or a combination of those methods.

In summary an embodiment of the invention refers to a signal transmitting and receiving device and a signal transmitting and receiving method which can reduce power consumption in a terminal device in a standby state in an optical and electric communication system. The signal transmitting and receiving device is for transmitting and receiving an information signal through a predetermined transfer path between terminal devices each of which transmits and receives the information signal while controlling an operation thereof in a self-sustaining manner based on an internally-generated signal. The signal transmitting and receiving device includes: a signal relaying means for relaying the information signal between each of the terminal devices and the transfer path; a device-state detecting means for generating a state indication signal indicating a state of the terminal device based on the internally-generated signal; and a power controlling means for controlling power supply to the signal relaying means based on the state indication signal. The internally-generated signal may include a standby signal and a clock signal in the terminal device.

## Claims

1. A signal transmitting and receiving device for transmitting and receiving an information signal through a predetermined transfer path between terminal devices each of which transmits and receives said information signal while controlling an operation thereof in a self-sustaining manner based on an internally-generated signal, the signal transmitting and receiving device comprising:
a signal relaying means for relaying said information signal between each of said terminal devices and said transfer path;
a device-state detecting means for generating a state indication signal indicating a state of said terminal device based on said internally-generated signal; and
a power controlling means for controlling power supply to said signal relaying means based on said state indication signal.

2. The signal transmitting and receiving device according to claim 1 or 2, wherein said internally generated signal includes a standby signal indicating that said terminal device is in a standby state.

3. The signal transmitting and receiving device according to any of the preceding claims, wherein said internally generated signal includes a clock signal in said terminal device.

4. The signal transmitting and receiving device according to any of the preceding claims, wherein said internally generated signal includes a signal indicating detection of a reception data error in said terminal device.

5. The signal transmitting and receiving device according to any of the preceding claims, wherein said power controlling means stops the power supply to said signal relaying means when said state indication signal indicates a failure or stop of a function of said terminal device.

6. The signal transmitting and receiving device according to any of the preceding claims, wherein said power controlling means controls a range of the power supply to said signal relaying means or a magnitude of a supplied power in accordance with said state indication signal in stages.

7. The signal transmitting and receiving device according to any of the preceding claims, wherein said signal relaying means includes an electric-to-optical conversion circuit or an optical-to-electric conversion circuit.

8. A signal transmitting and receiving method for use in the signal transmitting and receiving device that includes a signal relaying part and transmits and receives an information signal through a predetermined transfer path between terminal devices each of which transmits and receives the information signal while controlling an operation thereof in a self-sustaining manner based on an internally-generated signal, the method comprising the steps of:
generating a state indication signal indicating a state of each of said terminal devices based on said internally-generated signal of that terminal device; and
controlling power supply to said signal relaying part based on said state indication signal.
